# EUROPEAN PATENT APPLICATION

(11) **EP 1 992 981 A1**
(43) Date of publication of application: **19.11.2008**
(21) Application number: 08155306.7
(22) Date of filing: 28.04.2008
(51) Int. Cl.: G02C 5/20, G02C 5/22

(54) **Temple Adjustment Mechanism for Eyewear**

(30) Priority: 15.05.2007 JP 2007129725
(71) Applicant: Washin Optical Co., Limited, Chuo-ku Tokyo 104-0061 (JP)
(72) Inventor: Negishi, Tohru, Saitama-ken 331-0805 (JP); Saitoh, Masatoshi, Saitama-ken 330-0052 (JP)
(74) Representative: Gill, David Alan

(57) **Abstract**

A temple adjustment mechanism (26) includes a male side member (30) joined to one side of a rim (14), and a female side member (32) relatively movable to and from the male side member (30). A temple (24) is hingedly connected to the female side member (32). The male and female side members (30, 32) are relatively movable between a retracted position and an extended position. A spring (50) extends between the male and female side members (30, 32) to hold the two side members in their retracted position. A linkage (56) extends between the male and female side members (30, 32) and is manually operable to move the two side members to their extended position from their retracted position. When the male and female side members (30, 32) are moved to their extended position, the female side member (32) is longitudinally spaced from the male side member (30) so that the overall length of the temple (24) is increased.

## Description

The present invention generally relates to eyewear and more particularly, to a mechanism for adjusting the length of eyewear temples.

Bifocal lenses for eyewear each include a lower or near vision field and an upper or distance vision field. A wearer looks downwardly through the near vision field when viewing an object close to his eyes and looks straight ahead or upwardly through the distance vision field when viewing more distant objects. When the wearer tries to read something at or above eye level without removing his eyewear, he must either tilt his head backwards to an uncomfortable position or raise the eyewear frame to allow reading through the near vision field of the bifocal lenses.

To overcome the foregoing difficulties, various attempts have been made to adjust the length of eyewear temples. For example, United States Patent No. 6,183,080 discloses a mechanism for adjusting the angle of a lens frame relative to temples. Each of the temples includes a joint or lug secured to one side of the lens frame and a leg connected to the lug. The mechanism is arranged between the lug and the leg to relatively rotate the lug and the leg in a vertical plane so as to angularly adjust the lens frame relative to the temple and also, longitudinally adjust the overall length of the temple. The lens frame is forwardly angled relative to the temples so as to decrease the overall length of the temples and allow the reading segment of the lenses to be placed before the eyes of a wearer. The prior mechanism is, however, complicated in structure and requires expensive component parts and assembly.

Japanese patent application publication No. 2003-307713 shows a pair of bifurcated lugs extending rearwardly from opposite lateral sides of a lens frame. Each bifurcated lug includes a series of upper and lower openings. A temple is formed at its forward end with a ring. The ring is disposed between a selected pair of upper and lower openings to adjust the temple to the desired length. To fix the temple to the lug in position, a fastener is inserted through the openings and the ring. Japanese patent application publication No. 2007-47283 discloses a similar mechanism for adjusting temples to different lengths. The mechanism includes a pair of lugs extending rearwardly from opposite lateral sides of a lens frame, and a pair of hollow temples. Each lug has a longitudinal groove, and a sliding member slidably moved within the groove and having a screw hole. The temple has a longitudinal hole to telescopically receive the lug. The temple includes an aperture communicated with the groove of the lug. After the sliding member is moved to a desired position, a screw extends through the aperture and is threaded into the screw hole of the sliding member so as to secure the temple to the lug. The use of such a fastener makes it cumbersome to adjust the temples to the desired length.

Accordingly, it is an object of the present invention to provide a temple adjustment mechanism for eyewear having advantages over known such temple adjustment mechanisms.

According to the present invention, there is provided a temple adjustment mechanism for eyewear, which includes a first side member having a forward end adapted to be joined to one side of a lens frame and a rearward end, and a second side member having a forward end and a rearward end adapted to be hingedly connected to a temple. The second side member is relatively movable to and from the first side member. The first and second side members are relatively movable between a retracted position wherein the first and second side members abut with each other and an extended position wherein the second side member is longitudinally spaced from the first side member. A means is connected between the first and second side members to hold the first and second side members in their retracted position. A linkage extends between the first and second side members and is operable to move the first and second side members into their extended position from their retracted position.

The present invention can advantageously provide for a temple adjustment mechanism for eyewear which is capable of quickly and readily adjusting the length of eyewear temples.

In one embodiment, the first side member includes a post, and the second side member includes a hole sized to telescopically receive the post when the first and second side members are moved relative to each other. As an alternative, the post and the first side member may have respective holes. The means may include a spring extending through the hole of the post and having one end secured within the hole of the first side member and an other end secured within the hole of the second side member. This arrangement allows the spring to be disposed fully within the first and second side members.

In one embodiment, the linkage includes a front arm and a rear arm. The front arm has a forward end pivotably connected to the first side member and a rearward end. The rear arm has a forward end pivotably connected to the rearward end of the front arm and a rearward end pivotably connected to the second side member.

In one embodiment, the front arm includes a recess, and the first side member includes a stopper engageable with the recess when the first and second side members are moved to their extended position. The front arm may have a grip.

In one embodiment, the front arm includes a recess, and the first side member includes a bore, a spring disposed within the bore and a locking ball provided on the spring. The locking ball is selectively received in the recess to firmly hold the first and second side members in their extended position.

In one embodiment, the linkage is in the form of a toggle linkage movable between an unclamped position wherein the first and second side members are held in their retracted position and a clamped position wherein the first and second side members are held in their extended position.

The present invention may be best understood by reference to the following description when taken in conjunction with the accompanying drawings in which:
Fig. 1 is a side view of eyewear with a pair of temple adjustment mechanisms made according to the present invention, showing the manner in which each temple adjustment mechanism is movable between an extended position as shown by solid line and a retracted position as shown by broken line;
Fig. 2 is a side view of the eyewear with the temple adjustment mechanism held in its extended position;
Fig. 3 is a view similar to that of Fig. 2, but showing that the temple adjustment mechanism is held in its retracted position;
Fig. 4 is a perspective view, on an enlarged scale, of the temple adjustment mechanism as seen from the inside of the eyewear;
Fig. 5 is a view similar to that of Fig, 4, but showing that the temple adjustment mechanism is held in its retracted position;
Fig. 6 is a perspective view, on an enlarged scale, of the temple adjustment mechanism as seen from the outside of the eyewear;
Fig. 7 is a view similar to that of Fig, 6, but showing that the temple adjustment mechanism is held in its retracted position;
Fig. 8 is a side view of the temple adjustment mechanism shown in Fig. 6;
Fig. 9 is a side view of the temple adjustment mechanism shown in Fig. 7;
Fig. 10 is a sectional view taken on the line X-X in Fig. 6;
Fig. 11 is a sectional view taken on the line XI-XI in Fig. 7;
Fig. 12 is a perspective view, on an enlarged scale, of a temple adjustment mechanism made according to another embodiment of the present invention and held in its extended position, with part broken away to show that a spring is disposed within the mechanism; and
Fig. 13 is a perspective view, on an enlarged scale, of the temple adjustment mechanism held in its retracted position, as seen from the outside of the eyewear shown in Fig. 12.

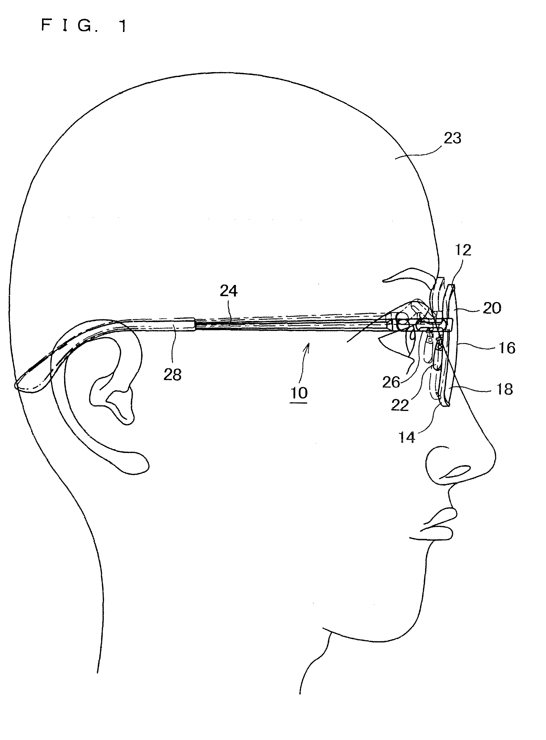

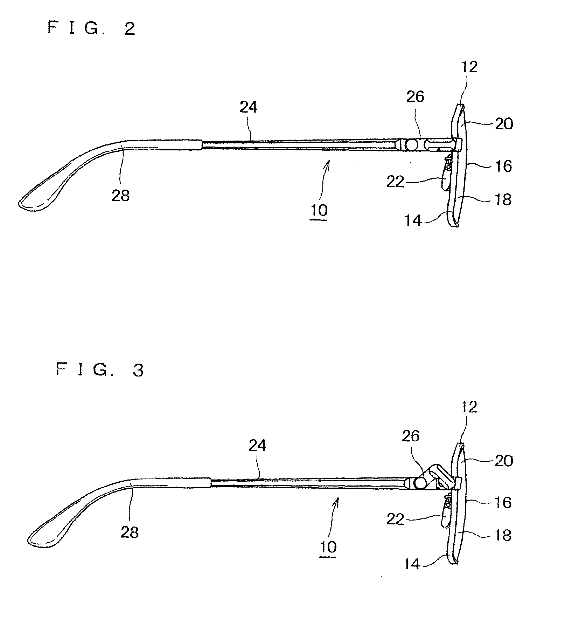

Referring now to Figs. 1 to 3, there is illustrated eyewear generally designated by reference numeral 10. The eyewear 10 includes a lens frame 12 composed of a pair of rims (only right rim 14 is shown) configured to hold a corresponding pair of right and left bifocal lenses (only right lens 16 is shown). Each of the bifocal lenses has two different focal fields, that is, a near vision field 18 at the lower part of the lens 16 and a distance vision field 20 at the upper part of the lens 16. Although not seen, a bridge extends between the rims. A pair of right and left nose pads (only right nose pad 22 is shown) are connected to the respective rims and rest on the nose of a wearer 23. A pair of right and left temples (only right temple 24 is shown) are connected at their forward end to the respective rims through a corresponding pair of right and left temple adjustment mechanisms (only right temple adjustment mechanism 26 is shown) made according to the present invention. The temples are provided at their rearward end with a corresponding pair of right and left earpieces (only right earpiece 28 is shown) configured to fit behind the ears of the wearer 23.

Throughout the drawings, only the right temple adjustment mechanism 26 is illustrated in order to simplify the drawings. It is to be understood, however, that the left temple adjustment mechanism is a mirror image of the right temple adjustment mechanism 26. The temple adjustment mechanism 26 is designed to adjust the temple 24 to different lengths and enable the two different focal fields 18, 20 to be moved to the most comfortable position of use for near or distance vision.

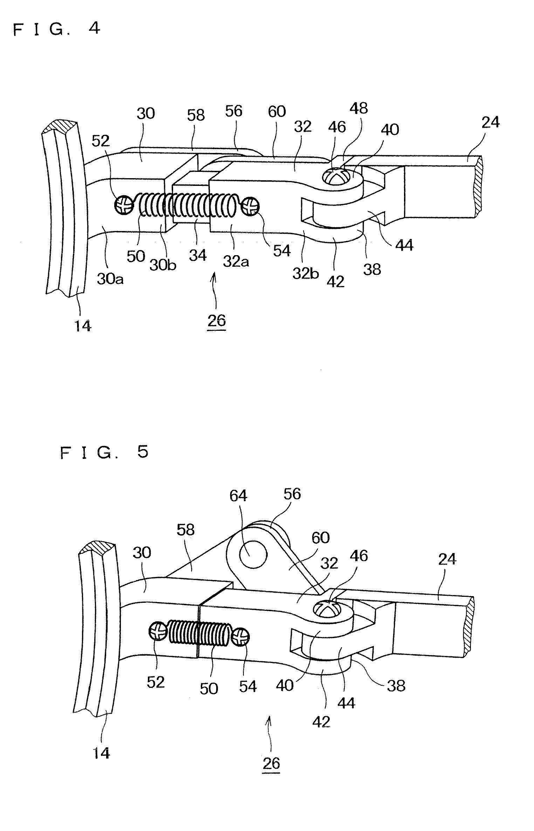

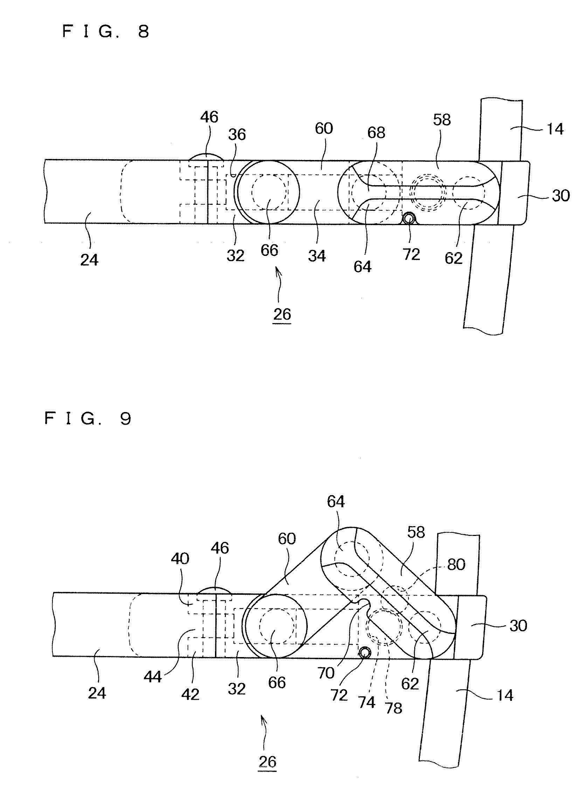

Referring to Figs. 4 to 9, the temple adjustment mechanism, generally designated by reference numeral 26, includes a substantially L-shaped first or male side member 30 and a second or female side member 32 relatively movable to and from the male side member 30. The male and female side members 30, 32 are relatively movable between a retracted position (see Figs. 5, 7 and 9) and an extended position (see Figs. 4, 6 and 8). The male side member 30 has a forward end 30a secured to one lateral side of the rim 14 and a rearward end 30b. A rectangular post 34 longitudinally and rearwardly extends from the rearward end 30b of the male side member 30 and is smaller in cross section than the male side member 30. The female side member 32 has a forward end 32a and a rearward end 32b. As shown better in Figs. 8 and 9, a rectangular hole 36 is longitudinally defined in the female side member 32 and sized to telescopically receive the post 34 when the male and female side members 30, 32 are moved relative to each other. The female side member 32 includes a bifurcated hinge 38 at its rearward end 32b. The hinge 38 includes an upper ring 40 and a lower ring 42 vertically spaced from the upper ring 40. The temple 24 is formed at its forward end with a ring 44. The ring 44 is interposed between the upper and lower rings 40, 42 of the hinge 38. The three rings 40, 42, 44 are secured by a vertical hinge pin 46 so that the temple 24 can be pivoted about the hinge pin 46 and inwardly folded for storage. The female side member 32 has a stopper 48 adjacent to the hinge 38. The stopper 48 extends laterally outwardly from the female side member 32 and limits outward pivotal movement of the temple 24.

A coil spring 50 has one end secured to the inner side of the male side member 30 by a screw 52 and an opposite end secured to the inner side of the female side member 32 by a screw 54. The coil spring 50 serves as a bias means for holding the male and female side members 30, 32 in their retracted position wherein the male and female side members 30, 32 abut with each other, and the post 34 is fully received within the hole 36. An articulated linkage 56 is manually operable to urge the male and female side members 30, 32 into the extended position from their retracted position. More specifically, the linkage 56 includes a front arm 58 and a rear arm 60. The front arm 58 has a forward end 58a pivotally connected to the outer side of the male side member 30 by a link pin 62 and a rearward end 58b. The rear arm 60 has a forward end 60a pivotably connected to the rearward end 58b of the front arm 58 by a link pin 64 (see Fig. 5) and a rearward end 60b pivotably connected to the outer side of the female side member 32 by a link pin 66. The front arm 58 may optionally have a grip 68. The grip 68 may be used to manually rotate the front and rear arms 58, 60. The front arm 58 includes a semicircular recess 70 formed below the grip 68. A stopper 72 extends laterally outwardly from the outer side of the male side member 30 and is in the form of a round pin. Although not shown, the semicircular recess 70 may alternatively be defined in the rear arm 60, and the stopper 72 may extend laterally outwardly from the outer side of the female side member 32.

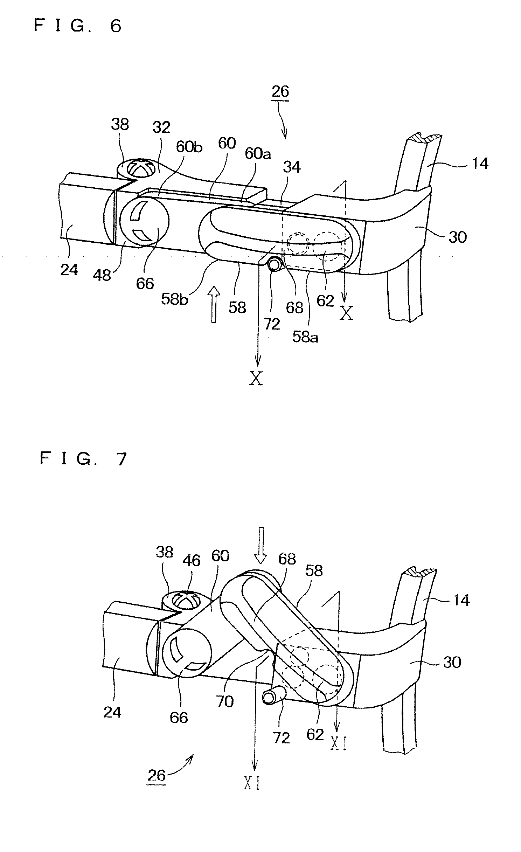

With the male and female side members 30, 32 held in their retracted position, the front and rear arms 58, 60 collectively form an inverted V-shape as shown better in Fig. 7. To move the male and female side members 30, 32 from their retracted to extended position, a sufficient amount of downward force is manually applied to a portion of the linkage 56 where the front and rear arms 58, 60 are interconnected, as shown by the arrow in Fig. 7. Alternatively, the grip 68 may be rotated in a downward direction. Then, the front and rear arms 58, 60 are downwardly pivoted about their respective link pins 62, 66. This causes the coil spring 50 to be extended from its compressed state. The female side member 32 is then moved away or spaced from the male side member 30 while the female side member 32 is telescopically moved relative to the post 34. The pivotal movement of the front and rear arms 58, 60 is stopped when the recess 70 of the front arm 58 is brought into engagement with the stopper 72. At this time, the front and rear arms 58, 60 are longitudinally aligned with each other and extend alongside the male and female side members 30, 32 as shown better in Fig. 6. When the male and female side members 30, 32 are moved to their extended position, the female side member 32 is spaced a distance from the male side member 30, and the overall length of the temple 24 is increased by that distance. As a result, the entire eyewear frame is slightly lowered along the nose of the wearer 23 so that the distance vision fields 20 of the bifocal lenses 16 are placed before the eyes of the wearer 23, as shown by solid line in Fig. 1.

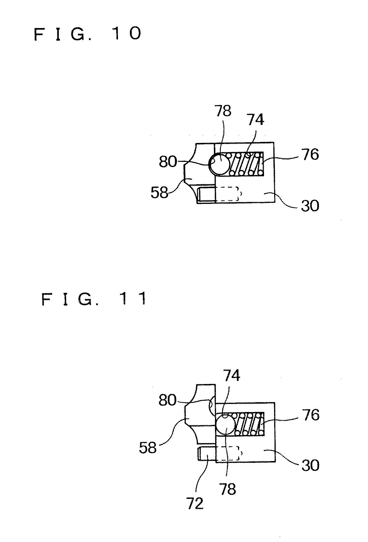

To more firmly hold the male and female side members 30, 32 in their extended position, the male side member 30 includes a lateral bore 74, a coil spring 76 disposed within the lateral bore 74, and a locking ball 78 arranged on the outer end of the coil spring 76 as shown in Figs. 10 and 11. A semicircular recess 80 is formed in the inner side of the front arm 58 and sized to selectively receive a part of the locking ball 78. With the male and female side members 30, 32 in their retracted position, the semicircular recess 80 is displaced from the locking ball 78 so that the adjacent flat surface of the front arm 58 serves to hold the locking ball 78 fully in the lateral bore 74 against the bias of the coil spring 76 as shown in Fig. 11. When the male and female side members 30, 32 are moved from their retracted to extended position, the semicircular recess 80 is brought into alignment with the lateral bore 74 as shown in Fig. 10. The coil spring 76 then urges the locking ball 78 against the semicircular recess 80. As a result, the locking ball 78 is partly received in the recess 80 to thereby lock the front arm 58 to the first side member 30. This prevents the male and female side members 30, 32 from being inadvertently returned to their retracted position.

To return the male and female side members 30, 32 to their retracted position from their extended position, a portion of the linkage 56 wherein the front and rear arms 58, 60 are interconnected is manually pressed up from below the linkage 56, as shown by the arrow in Fig. 6. This causes the front and rear arms 58, 60 to be pivoted in an upward direction. The semicircular recess 80 is then displaced from the locking ball 78 such that the front arm 58 is unlocked from the male side member 30. As the front arm 30 is unlocked, the coil spring 50 urges the male and female side members 30, 32 into their retracted position. This results in a decrease in the overall length of the temple 24. The entire lens frame 12 is thus slightly raised along the nose of the wearer 23 so that the near vision fields 18 of the lenses 12 are placed before the eyes of the wearer 23 as shown by broken line in Fig. 1.

In the illustrated embodiment, the post 34 extends from the male side member 30, and the hole 36 is defined in the female side member 32. As an alternative, the post 34 may forwardly extend from the female side member 32, and the hole 36 may be defined in the male side member 30.

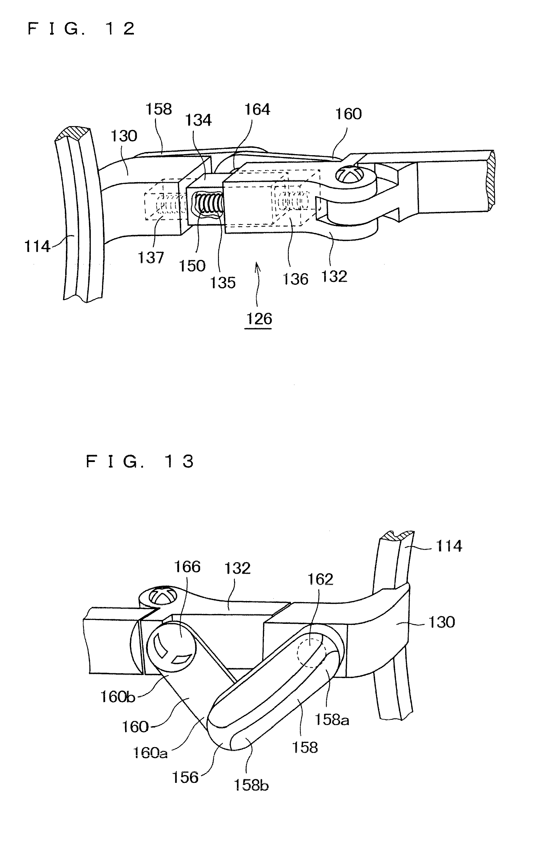

Figs. 12 and 13 illustrate a temple adjustment mechanism, generally designated by reference numeral 126, made according to another embodiment of the present invention wherein parts corresponding to those previously described are identified by corresponding reference numbers, increased by 100. To improve the aesthetic appearance of eyewear, a coil spring 150 is disposed within the temple adjustment mechanism 126 and can not be seen from the outside of the eyewear.

Specifically, the temple adjustment mechanism 126 includes a male side member 130 secured to one side of a rim 114 and a female side member 132 relatively movable to and from the male side member 130. The male side member 130 includes a longitudinally extending post 134. The female side member 132 includes a hole 136 to telescopically receive the post 134 as in the previous embodiment. In this embodiment, the post 134 has a through hole 135, and the male side member 130 also has a hole 137. The three holes 135, 136, 137 are communicated with each other. A coil spring 150 extends through the post 134 and has one end secured within the hole 137 of the male side member 130 and an other end secured within the hole 136 of the female side member 132. Thus, the coil spring 150 is disposed fully within the temple adjustment mechanism 126.

In this embodiment, a linkage 156 is in the form of a toggle linkage and includes a front arm 158 and a rear arm 160. The front arm 158 includes a forward end 158a pivotably connected to the male side member 130 by a link pin 162 and a rear end 158b. The rear arm 160 includes a forward end 160a pivotably connected as at 164 to the rearward end 158b of the front arm 158 and a rearward end 160b pivotably connected to the female side member 132 by a link pin 166. With the male and female side members 130, 132 in their retracted position, the front and rear arms 158, 160 collectively form a V-shape. The toggle linkage 156 is movable between an unclamped position as shown in Fig. 13 wherein the male and female side members 130, 132 are held in their retracted position and a clamped position as shown in Fig. 12 wherein the male and female side members 130, 132 are held in their extended position. To move the male and female side members 130, 132 from their retracted to extended position, the toggle linkage 156 is manually pressed in a direction such that the front and rear arms 158, 160 are upwardly pivoted about their respective link pins 162, 166. After the front and rear arms 158, 160 are passed through their center position wherein the front and rear arms 158, 160 are longitudinally aligned, the front and rear arms 158, 160 are urged into their clamped position. At this time, the rearward end 158b of the front arm 158 and the forward end 160a of the rear arm 160 are positioned slightly above the top surfaces of the male and female side members 130, 132. This arrangement eliminates the need for a combination of a stopper and a recess as used in the previous embodiment. To return the male and female side members 130, 132 to their retracted position, a portion of the toggle linkage 156 wherein the front and rear arms 158, 160 are interconnected is downwardly pressed until the front and rear arms 158, 160 passes through their center position and then, moved to their unclamped position. A locking mechanism such as shown in Figs. 10 and 11 may optionally be included in this embodiment.

It should be noted that the temple adjustment mechanisms can be secured directly to a pair of corresponding lenses where eyewear has no lens frame or rim. In the illustrated embodiments, the temple adjustment mechanism is applied to eyewear with bifocal lenses. The temple adjustment mechanism is equally applicable to eyewear with other multifocal lenses as well as to eyewear with regular lenses and sunglasses where secure and tight fitting is required, for example, under strenuously active conditions such as sport.

## Claims

1. A temple adjustment mechanism (26, 126) for adjustably connecting a temple (24) to a lens frame, said temple adjustment mechanism (26, 126) including a first side member (30, 130) having a forward end (30a) adapted to be joined to one side of the lens frame and a rearward end (30b), and a second side member (32, 132) having a forward end (32a) and a rearward end (32b) adapted to be hingedly connected to the temple (24), **characterised in that**
said second side member (32, 132) is relatively movable to and from said first side member (30, 130), said first and second side members (30, 32, 130, 132) being relatively movable between a retracted position wherein said first and second side members (30, 32, 130, 132) abut with each other and an extended position wherein said second side member (32, 132) is longitudinally spaced from said first side member (30, 130), that
means (50, 150) extends between said first and second side members (30, 32, 130, 132) and is operable to hold said first and second side members (30, 32, 130, 132) in said retracted position, and that
a linkage (56, 156) extends between said first and second side members (30, 32, 130, 132) and is operable to move said first and second side members (30, 32, 130, 132) into said extended position from said retracted position.

2. A temple adjustment mechanism according to claim 1, **characterised in that** one (30, 130) of said first and second side members (30, 32, 130, 132) includes a post (34, 134), and the other side member (32, 132) includes a hole (36, 136) sized to telescopically receive the post (34, 134) when said first and second side members (30, 32, 130, 132) are moved relative to each other.

3. A temple adjustment mechanism according to claim 1 or 2, **characterised in that** said means includes a spring (150), and that said one side member (130) includes a hole (137), and said post (134) includes a through hole (135), said spring extending (150) through said through hole (135) of said post (134) and having one end secured within said hole (137) of said one side member (130) and an other side secured within said hole (136) of said other side member (132).

4. A temple adjustment mechanism according to any one of claims 1 to 3, **characterised in that** said linkage (56, 156) includes a front arm (58, 158) and a rear arm (60, 160), said front arm (58, 158) having a forward end (58a) pivotably connected to said first side member (30, 130) and a rearward end (58b), and said rear arm (60, 160) having a forward end (60a) pivotably connected to said rearward end (58b) of said front arm (58, 158) and a rearward end (60b) pivotably connected to said second side member (32, 132).

5. A temple adjustment mechanism according to claim 4, **characterised in that** said front arm (58) includes a recess (70), and said first side member (30) includes a stopper (72) engageable with said recess (70) when said first and second side members (30, 32) are moved to said extended position.

6. A temple adjustment mechanism according to claim 4 or 5, **characterised in that** said front arm (58) includes a grip (68).

7. A temple adjustment mechanism according to any one of claims 4 to 6 **characterised in that** said front arm (58) includes a recess (80), and said first side member (30) includes a bore (74), a spring (76) disposed within said bore (74) and a locking ball (78) provided on said spring (76) and selectively received in said recess (80) of said front arm (58)

8. A temple adjustment mechanism according to any one of claims 1 to 4, **characterised in that** said linkage is a toggle linkage (156) movable between an unclamped position wherein said first and second side members (130, 132) are held in said retracted position and a clamped position wherein said first and second side members (130, 132) are held in said extended position.
